# EUROPÄISCHE PATENTANMELDUNG

(11) **EP 1 010 511 A1**
(43) Veröffentlichungstag der Anmeldung: **21.06.2000**
(21) Anmeldenummer: 99124471.6
(22) Anmeldetag: 08.12.1999
(51) Int. Cl.: B29C 45/16

(54) **Verfahren und Vorrichtung zum Spritzgiessen von ein-, zwei- oder mehrfarbigen Kunststoffteilen**

(30) Priorität: 17.12.1998 DE 19858183
(71) Anmelder: Grünhagel, Otto, 32107 Bad Salzuflen (DE)
(72) Erfinder: Grünhagel, Otto, 32107 Bad Salzuflen (DE)
(74) Vertreter: TER MEER STEINMEISTER & PARTNER GbR

(57) **Zusammenfassung**

Die Erfindung umfaßt eine Vorrichtung zum Spritzgießen von ein-, zwei- oder mehrfarbigen Kunststoffteilen in zwei oder mehreren, mittelbar oder unmittelbar aufeinanderfolgenden Schritten, mit einem Spritzwerkzeug mit Matrize (10), Kern (12,12') und Schiebern, dadurch gekennzeichnet, daß zwei gegeneinander auswechselbare Kerne (12,12') vorgesehen sind, daß der zunächst eingesetzte erste Kern (12) mit der Matrize (10) einen Formhohlraum (20) zum Spritzen des helleren, insbesondere transparenten Bereichs als Vorspritzling (26) bildet und daß der als nächstes einsetzbare zweite Kern (12') mit der Matrize (10) und dem Vorspritzling (26) einen Formhohlraum für den dunkleren Bereich 828) des Kunststoffteils bildet und dabei den Vorspritzling (26) nur in einem schmalen Randstreifen (34) um den Formhohlraum herum berührt.

## Beschreibung

Die Erfindung betrifft ein Verfahren und eine Vorrichtung zum Spritzgießen von ein-, zwei- oder mehrfarbigen Kunststoffteilen in zwei oder mehreren unmittelbar aufeinanderfolgenden Schritten.

Ein-, zwei- oder mehrfarbige Kunststoffteile werden heute vielfach in ein. zwei oder mehreren mittelbar oder unmittelbar aufeinanderfolgenden Schritten gespritzt. Anwendungsgebiete für derartige Kunststoffteile sind beispielsweise Heckleuchtenabdeckungen (Lichtscheiben) und seit einigen Jahren auch Scheinwerferabdeckungen (Streuscheiben) von Kraftfahrzeugen, beispielsweise aus Polycarbonat. Auf diese Weise entstehen beispielsweise Scheinwerferabdeckungen aus transparentem Material mit integrierten Teilflächen, aus orangefarbenem Material für integrierte Blinklichter. Üblich ist es auch, transparente Scheinwerferabdeckungen mit einem partiell oder umlaufend angeordneten farbigen Rahmen zu versehen. Derartige Scheinwerferabdeckungen sollen im vorliegenden Zusammenhang zur näheren Erläuterung des Standes der Technik und der vorliegenden Erfindung herangezogen werden, ohne daß die Erfindung insoweit beschränkt wäre.

Üblicherweise werden Scheinwerferabdeckungen mit partiell angeordnetem oder umlaufendem farbigem Rahmen hergestellt, indem in einem ersten Schritt der farbige Rahmen gespritzt und im zweiten Schritt die transparente Fläche über den Rand des Rahmens hinweg in den Rahmen hineingespritzt wird. Dabei wird das Spritzteil beim bekannten Verfahren vom Kern her aufgebaut, während die Matrize der Spritzgießform nach der Herstellung des farbigen Rahmens für die Herstellung der Klarsichtfläche ausgetauscht wird.

Die bekannte Verfahrensweise hat den Nachteil, daß beim Einspritzen des transparenten Materials, das teilweise über und an dem farbigen Rand entlangströmt, das farbige Material ausgewaschen wird, so daß die Trennlinie zwischen den farbigen und transparenten Flächen unsauber aussieht. Diesen Nachteil versucht man bei verschiedenen, in der Praxis befindlichen Anwendungen dadurch auszugleichen, daß für die erste Farbe Werkstoffe mit höherer Verarbeitungstemperatur und höherer Wärmeformbeständigkeit verwendet werden. Abgesehen von dem erheblich höheren Materialpreis geeigneter Materialien mit den genannten Eigenschaften und dem damit verbundenen Kostennachteil, entsteht bei diesem Verfahren ein beträchtlicher Qualitätsnachteil durch das unterschiedliche rheologische Verhalten der beiden Materialien, weil in den Randzonen der Farbtrennungen erhöhte Spannungen auftreten. Abgesehen von der Neigung zu Spannungsrissen besteht auch die Gefahr von Ablösungen in der Verbindungsstelle der beiden Materialien.

Ein weiterer Nachteil dieses Verfahrens zeigt sich bei der anschließenden Nachbehandlung der gespritzten Kunststoffteile. Kunststoffscheiben aus Polycarbonat für KFZ-Scheinwerfer werden zum Erreichen einer ausreichenden Kratzfestigkeit, Chemikalienbeständigkeit und Beständigkeit gegenüber UV-Strahlen auf allen der Außenbewitterung ausgesetzten Bereichen mit einer Hardcoat-Beschichtung versehen. Da diese naß aufgetragen wird, besteht hierbei, insbesondere in den Bereichen von Farbtrennungen bei erhöhtem Spannungsprofil wegen unterschiedlichen Materialpaarungen, die Gefahr von Rißbildung bei Benetzung mit in der Beschichtung enthaltenen Lösungsmitteln. Üblicherweise begegnet man diesem Mangel dadurch, daß die Teile vor dem Beschichten einer gezielten Wärmebehandlung (Tempern) unterzogen werden. Das funktioniert jedoch nur bei Materialien gleicher Rheologie. Haben die Materialien eine unterschiedliche Rheologie, kann für die Wärmebehandlung nur die zulässige Temperatur für das Material mit niedrigerer Wärmeformbeständigkeit eingesetzt werden. Das Material mit der höheren Wärmeformbeständigkeit ist dann nicht beeinflußt, so daß sich der Spannungshaushalt im Farbtrennbereich noch mehr verschlechtert.

Ein weiterer Nachteil der bekannten Verfahrensweise besteht darin, daß beim Spritzen der transparenten Fläche im zweiten Schritt Schiebermarkierungen auf der Innenseite der transparenten Fläche entstehen können. Schieber werden eingesetzt, wenn das Werkstück hinterschnittene Bereiche hat, die durch einfache Trennung von Kern und Matrize nicht zu entformen sind. Für die hinterschnittenen Bereiche werden daher Schieber eingesetzt, die vor oder nach dem Trennen der beiden Formhälften zurückgezogen werden können.

Hinterschneidungen befinden sich im hier behandelten Beispiel einer Scheinwerferabdeckung, mit partiell oder umlaufend angeordnetem farbigem Rahmen, im Inneren des Rahmens, falls dies beispielsweise durch die Einbausituation in die Fahrzeugkarosserie vorgegeben ist.

Wenn im Kern für die Herstellung dieser Hinterschneidungen Schieber vorgesehen sind, müssen diese vor dem Entformen von der Kernkontur unmittelbar über die Innenfläche der transparenten Scheinwerferscheibe zurückgezogen werden. Dadurch entstehen mindestens von einer Seite zur anderen, insbesondere zur gegenüberliegenden Seite des Teiles, Markierungen auf der Innenseite im durchsichtigen Bereich der Scheinwerferscheibe.

Der Erfindung liegt daher die Aufgabe zugrunde, ein Verfahren und eine Vorrichtung der obigen Art zu schaffen, die es gestatten, ein-, zwei- oder mehrfarbige Kunststoffteile ohne die Gefahr einer Bildung von Auswaschungen und das Erscheinungsbild störende Schiebermarkierungen in guter Qualität herzustellen.

Diese Aufgabe wird nach der vorliegenden Erfindung durch ein Verfahren gelöst, bei dem zunächst der hellere, insbesondere transparente Bereich und sodann der oder die dunkleren oder intensiver gefärbten Bereiche des Werkstücks hergestellt werden.

Insbesondere wird bei einer Scheinwerfer- oder Rücklichtabdeckung eines Kraftfahrzeugs, mit partiell oder umlaufend farbigem Rahmen, zunächst der hellere, insbesondere transparente Teilbereich und sodann der oder die farbigen, partiell oder umlaufend angeordnete Rahmen oder Konturbereiche gespritzt.

Wenn die Aufgabenstellung ausschließlich darauf gerichtet ist, die störende Schiebertrennung zu eliminieren bzw. zu minimieren, kann als nachfolgendes Material auch das gleiche wie bei der vorhergehenden Einspritzung verwendet werden, d. h., es können einfarbige Teile in zwei nacheinanderfolgenden Spritzvorgängen verwendet werden.

In vorrichtungstechnischer Hinsicht wird die gestellte Aufgabe gelöst durch eine Vorrichtung zum Spritzen von ein-, zwei- oder mehrfarbigen Kunststoffteilen in zwei oder mehreren mittelbar oder unmittelbar aufeinanderfolgenden Schritten, mit einem Spritzwerkzeug mit Matrize, Kern und Schiebern, die dadurch gekennzeichnet ist, daß wenigstens zwei gegeneinander auswechselbare Kerne vorgesehen sind, daß der zunächst eingesetzte erste Kern mit der Matrize einen Formhohlraum zum Spritzen des helleren, insbesondere transparenten Bereichs als Vorspritzling bildet und daß der als nächster eingesetzte zweite Kern mit der Matrize und dem Vorspritzling einen Formhohlraum für den dunkleren Bereich des Kunststoffteils bildet und dabei den Vorspritzling nur in einen schmalen Randstreifen um den Formhohlraum herum berührt.

Dies kann dadurch erreicht werden, daß entweder der zweite Kern im Bereich des Randstreifens des Vorspritzlings, an dem dieser an den im zweiten Schritt herzustellenden dunkleren Bereich angrenzt, eine vorspringende Rippe aufweist, oder daß eine derartige Rippe bei Herstellung des Vorspritzlings bereits durch entsprechende Formung des ersten Kerns hergestellt wird.

Das bedeutet, daß von der Matrizenseite her aufgebaut wird, während die Kernkontur zwischen den beiden Schritten des Spritzvorganges ausgetauscht wird. Die eigentliche Scheibe bildet den Vorspritzling, der ohne Schiebertrennungen zwischen Matrize und Kern gespritzt wird. Dabei können alle Hinterschnittbereiche der Randkontur entfallen, so daß der Kern ungeteilt die gesamte innere Konturoberfläche abdeckt. Der Vorspritzling verbleibt in der Matrize oder wird in eine Matrize gleicher Geometrie eingelegt. Danach wird ein anderer Kern oder werden andere Kerne mit abweichender Formkontur in Kontakt zu dem Vorspritzling gebracht. Im Bereich der Farb- oder Materialtrennung berührt der Kern den Vorspritzling, vorzugsweise mit einem schmalen Steg (ca. 1 mm Breite), der vorstehend am Kern oder vorstehend am Vorspritzling angeordnet sein kann. Die übrigen Bereiche des oder der Kerne sind freigestellt und bekommen keinen Kontakt zum Vorspritzling, so daß keine Abdruckmarkierungen auf der Fläche des Vorspritzlings entstehen können. Daher ist es unerheblich, ob die Kernoberfläche in diesem Bereich ganzflächig aus einem Stück oder geteilt durch Schieber oder andere Werkzeugelemente ausgeführt ist. Danach wird das nachfolgende oder werden die nachfolgenden Materialien eingespritzt.

Als Vorteil ist hervorzuheben, daß durch die Spritzfolge - erst transparentes Material, dann farbiges Material oder farbige Materialien - keine Auswaschungen des farbigen Materials im Bereich der Farbtrennung entstehen können. Dadurch können Materialien gleicher Rheologie zum Einsatz kommen, wodurch der Spannungshaushalt im Bereich der Farb- oder Materialtrennung günstig verläuft. Daraus ergibt sich ein Kostenvorteil, da als farbiges Material oder Materialien gleich- oder niederwertige Werkstoffe ohne Qualitätseinbuße zum Einsatz kommen können.

Ein weiterer Vorteil der Erfindung besteht darin, daß bei der Konstruktion des Spritzwerkzeuges bei Teilen mit Hinterschnitten auf der Kernseite für die Festlegung der Schiebertrennung oder Trennungen keine Rücksicht auf optische oder stylistische Erfordernisse genommen werden muß, so daß ausschließlich die Funktionalität des Werkzeuges zu beachten ist. Daraus resultiert ein weiterer erheblicher Kostenvorteil.

Zudem können Teile mit erheblich mehr und komplizierteren Hinterschnitten gestaltet werden, da die dafür erforderlichen Schiebertrennungen nur im schmalen Randbereich, jedoch nicht in der eigentlichen Sichtfläche der transparenten Scheibe sichtbar sind.

Im folgenden werden bevorzugte Ausführungsbeispiele der Erfindung anhand der beigefügten Zeichnung näher erläutert.
- Fig. 1 ist ein Querschnitt durch einen Teilbereich eines erfindungsgemäßen Werkzeugs und veranschaulicht insbesondere den Formhohlraum zum Spritzen des ersten, helleren oder transparenten Bereichs, im vorliegenden Zusammenhang auch als Vorspritzling bezeichnet, dargestellt an einem Schnitt durch den unteren Rand einer transparenten Scheinwerferabdeckung mit umlaufendem schwarzem Rahmen;
- Fig. 2 ist eine entsprechende Schnittdarstellung, veranschaulicht jedoch die Situation nach dem Spritzen des Vorformlings, der in dunkler Schraffur dargestellt ist;
- Fig. 3 ist eine entsprechende Schnittdarstellung und zeigt den im zweiten Schritt hergestellten dunkleren Rahmen in dunkler Schraffur sowie die beiden dazugehörigen Werkzeuge;
- Fig. 4 ist eine Schnittdarstellung, die die Situation am oberen Rand der transparenten Abdeckungs-Scheibe zeigt und in der der Vorformling in diesem Bereich ebenfalls in dunkler Schraffur gezeigt ist;
- Fig. 5 veranschaulicht die Form der Werkzeuge im Bereich des oberen dunklen Rahmens.

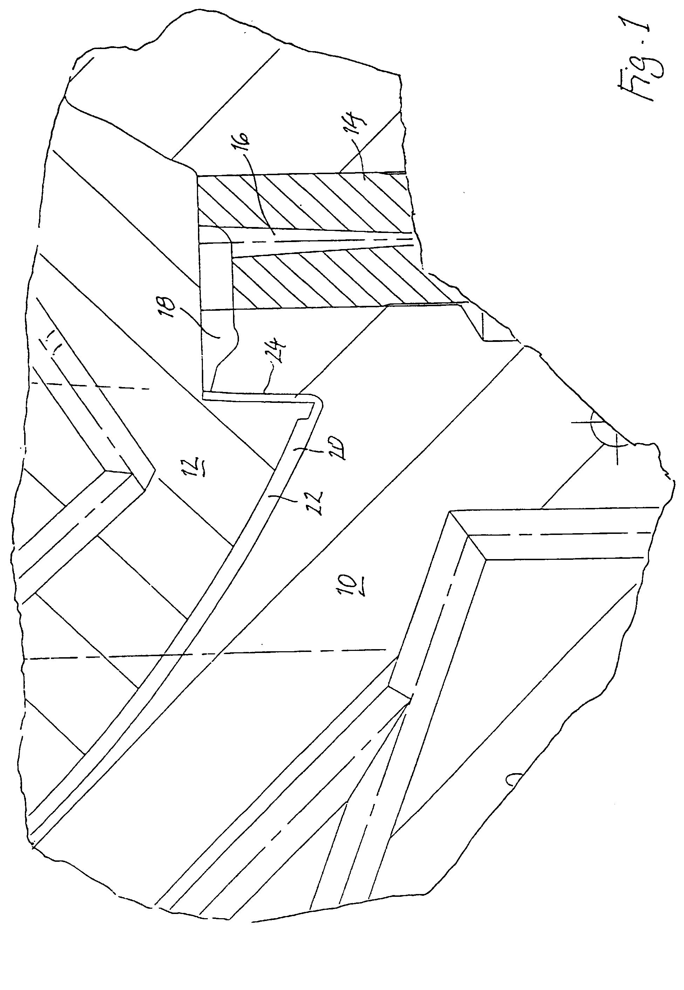

In Fig. 1 ist ein Teilschnitt aus einem Spritzwerkzeug für eine transparente Scheinwerferabdeckung aus Kunststoff gezeigt. Da Spritzwerkzeuge an sich bekannt sind, sollen hier nur die für die Erfindung wesentlichen Aspekte im einzelnen erläutert werden. Das Werkzeug umfaßt eine Matrize 10, einen ersten Kern 12, eine Reihe von in Matrize und Kern verlaufenden, nicht im einzelnen bezeichneten Kanälen und eine Einspritzdüse 14, deren Einspritzkanal 16 in einen Hohlraum 18 übergeht, der unmittelbar an den hier interessierenden Formhohlraum 20 für den ersten, transparenten Bereich des Kunststoffteils, auch Vorspritzling genannt, angrenzt. Dieser Formhohlraum 20 setzt sich zusammen aus einem leicht gewölbten, flächigen Bereich 22 und einem spitzwinklig abgewinkelten Bereich 24.

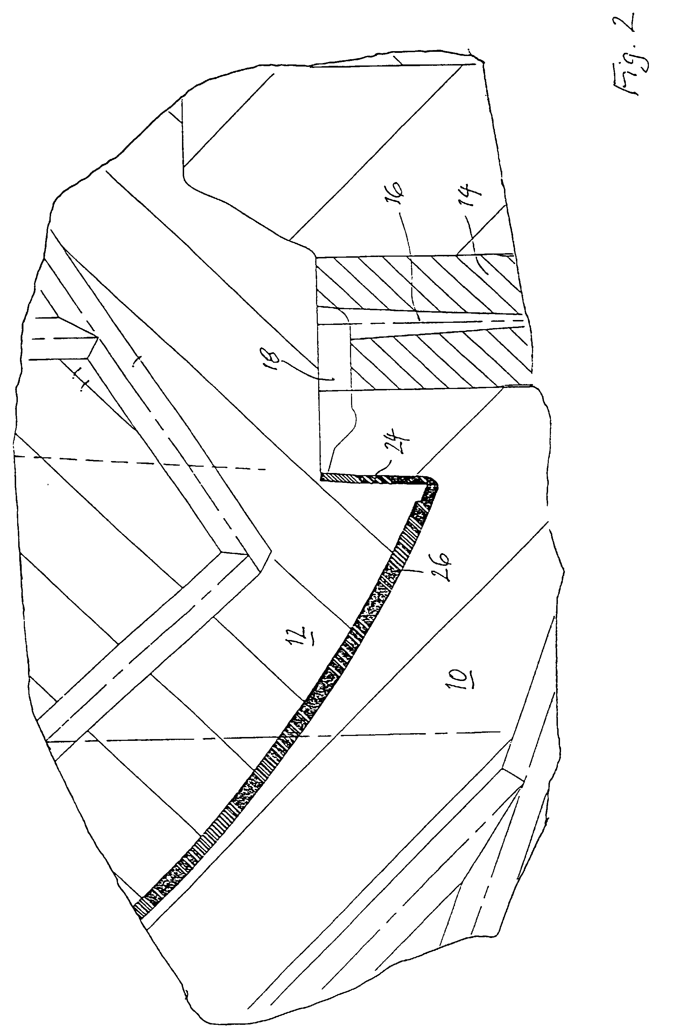

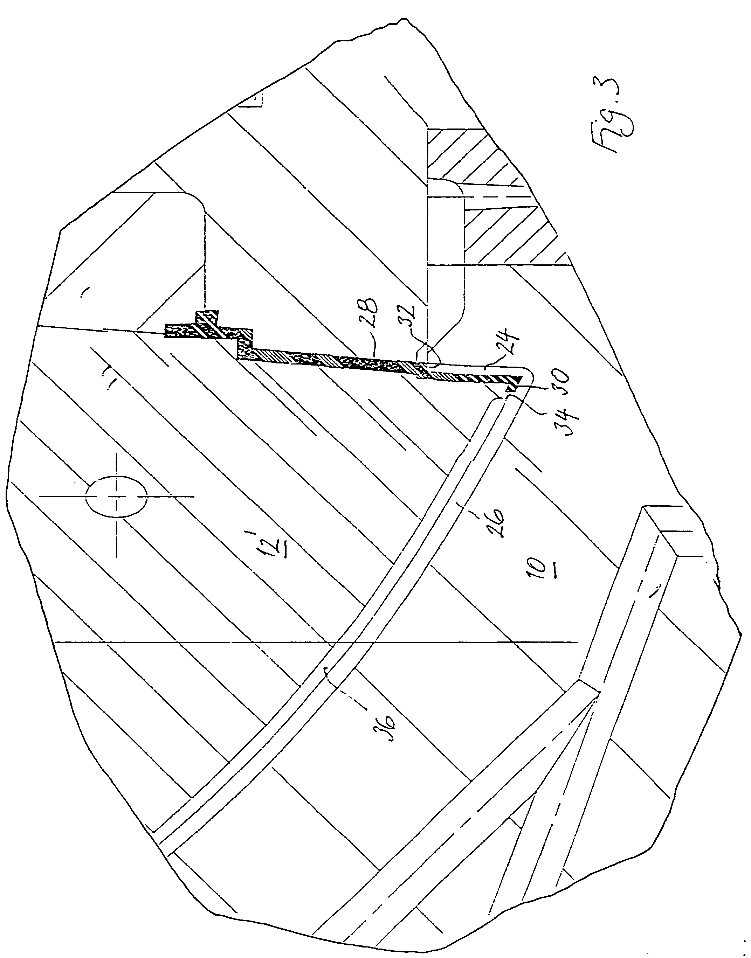

Fig. 2 entspricht Fig. 1, zeigt jedoch an Stelle des in Fig. 1 dargestellten Formhohlraums 20 den bereits gespritzten Vorspritzling 26 in dunkler Schraffur. Wie erwähnt, handelt es sich bei diesem Vorspritzling 26 um den Teilbereich des Kunststoffteils, der aus hellerem, insbesondere transparentem Material besteht, hier verdeutlicht am Beispiel der transparenten Abdeckung von Kraftfahrzeugscheinwerfern. Fig. 3 zeigt wiederum eine entsprechende Darstellung und veranschaulicht nunmehr neben dem Formhohlraum 20 bzw. dem in diesem hergestellten Vorspritzling 26 den im zweiten Schritt hergestellten dunkleren Bereich, am Beispiel der Scheinwerferabdeckung gebildet durch den umlaufenden farbigen Rahmen 28. In Fig. 3 ist, zur Unterscheidung der Rahmen in dunkler Schraffur, der Vorspritzling 26 dagegen transparent dargestellt. Es ist erkennbar, daß der Rahmen 28 in einem Teilbereich gegen den abgewinkelten Bereich 24 des Vorspritzlings anliegt und hier über eine Abwinklung 30 und eine Abstufung 32 mit diesem zur Unterstützung der ohnehin bestehenden Kohäsionskräfte verzahnt ist.

In Fig. 3 ist einer der wesentlichen Aspekte der vorliegenden Erfindung zu erkennen. Der zweite Kern 12' berührt die gewölbte Innenfläche des Vorspritzlings 26 keineswegs in ihrer Gesamtheit, sondern nur mit einem schmalen Randstreifen 34 unmittelbar am Übergang von dem Vorspritzling 26 zu dem Rahmen 28. Bei der dargestellten Ausführungsform springt dieser Randstreifen 34 angrenzend an die Abwinklung 30 des Rahmens 28 von der entsprechenden Fläche des zweiten Kerns 12' vor, während der Kern 12' insgesamt einen Abstand zu der gewölbten Innenfläche des Vorspritzlings 26 hält und hier einen Zwischenraum 36 bildet. Alle etwaigen Rückzugsbewegungen von Schiebern des Kerns 12', die bei der Herstellung des Rahmens 28 benötigt werden, führen daher nicht zu Gleitbewegungen auf der Innenfläche des transparenten Vorspritzlings 26 und damit nicht zu Spuren, die sich auf dieser Innenfläche abzeichnen und bei transparentem Material deutlich und störend sichtbar sind.

Es wurde bereits darauf hingewiesen, daß an Stelle des vorspringenden Randstreifens 34 am zweiten Kern 12' auch durch Gestaltung des ersten Kerns 12 dafür gesorgt werden kann, daß der Vorspritzling 26 in dem dem vorspringenden Randstreifen 34 des zweiten Kerns in Fig. 3 entsprechenden Bereich einen von der Innenfläche des Vorspritzlings nach innen vorspringenden, in der Zeichnung nicht dargestellten Randstreifen aufweist.

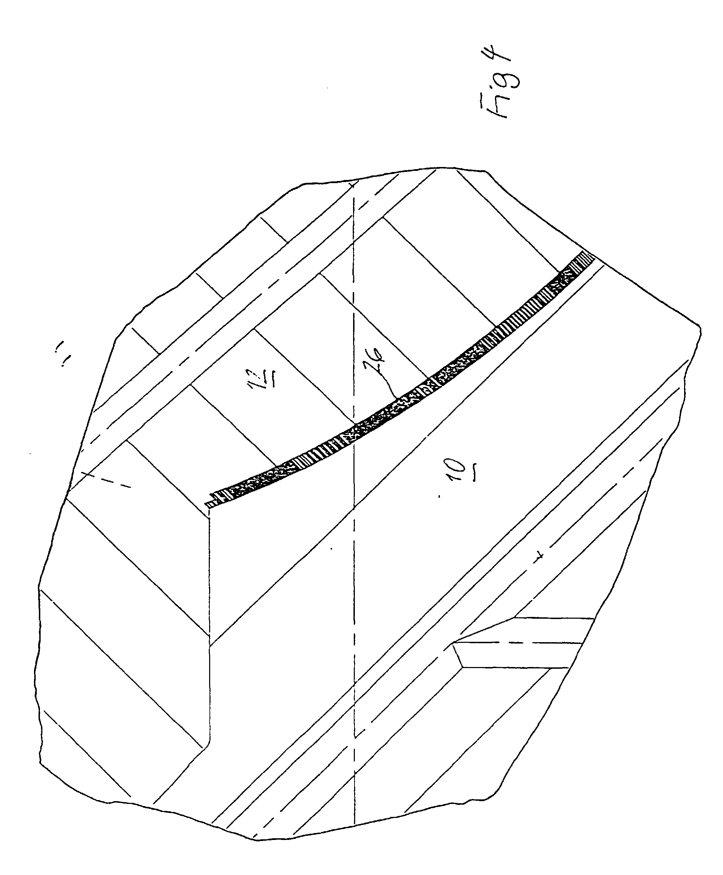

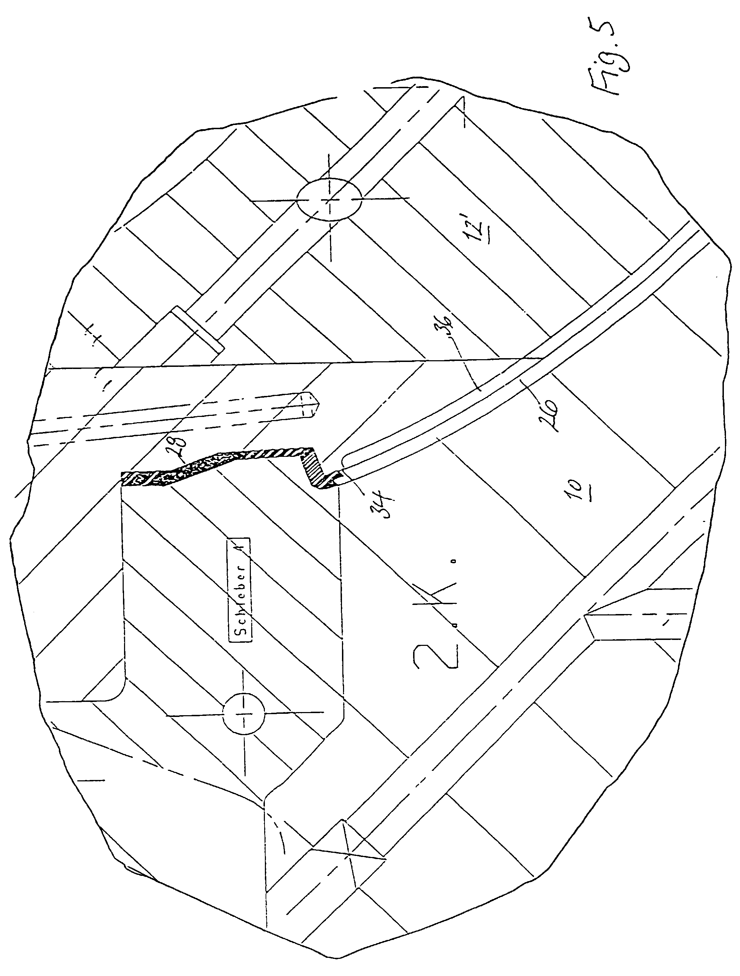

Fig. 4 und 5 zeigen eine vergleichbare Situation aus dem Inneren des Werkstücks für die Herstellung der Scheinwerferabdeckung, jedoch bezogen auf den oberen Rand, während sich Fig. 1 bis 3 auf den unteren Rand dieser Scheinwerferabdeckung beziehen. In Fig. 4 ist im Schnitt wiederum der Vorspritzling 26 in dem durch die Matrize 10 und den ersten Kern 12 gebildeten Formhohlraum gezeigt. Der Vorspritzling ist wiederum dunkel schraffiert dargestellt.

Fig. 4 zeigt die Matrize 10 zusammen mit dem zweiten Kern 12' und dem dunkel schraffiert dargestellten Rahmen bzw. den entsprechenden Formhohlraum zwischen der Matrize 10 und dem zweiten Kern 12'. Auch hier ist der vorspringende Randstreifen 34 des zweiten Kerns am Übergang zwischen dem Vorspritzling 26 und dem Rahmen 28 erkennbar, der den zwischen dem zweiten Kern 12' und der gewölbten Innenfläche des Vorspritzlings 26 gebildeten Zwischenraum 36 einrahmt. Es wurde bereits darauf hingewiesen, daß an Stelle dieses vorspringenden Randstreifens 34 auch durch entsprechende Gestaltung des ersten Kerns 12 dafür gesorgt werden kann, daß ein entsprechender vorspringender Randstreifen am Vorspritzling ausgebildet ist.

Die vorliegende Erfindung ist nicht auf das Beispiel der Scheinwerferabdeckung für Kraftfahrzeuge beschränkt, sondern auch auf andere, mehrstufig hergestellte Kunststoffteile anwendbar. Ein wichtiger Aspekt ist dabei in jedem Falle, daß in dem ersten Schritt das hellere, gegebenenfalls transparente Material und im zweiten Schritt das dunklere Material gespritzt wird, und daß im zweiten Schritt der zweite Kern den Vorspritzling nur so weit berührt, wie dies im Interesse einer festen Positionierung und Trennung der beiden Formhohlräume für die beiden aufeinanderfolgend hergestellten Kunststoffbereiche notwendig ist.

## Patentansprüche

1. Verfahren zum Spritzgießen von ein-, zwei- oder mehrfarbigen Kunststoffteilen in zwei oder mehreren, mittelbar oder unmittelbar aufeinanderfolgenden Schritten, dadurch **gekennzeichnet**, daß zunächst der hellere, insbesondere transparente Bereich und sodann der oder die dunkleren oder intensiver gefärbten Bereiche des Werkstücks hergestellt.

2. Verfahren zum Spritzgießen von ein-, zwei- oder mehrfarbigen Kunststoffteilen in zwei oder mehreren, mittelbar oder unmittelbar aufeinanderfolgenden Schritten nach Anspruch 1, dadurch **gekennzeichnet**, daß zunächst in dem ersten Schritt ein flächiges Teil aus dem helleren oder aus transparentem Material und in einem zweiten Schritt ein dieses umgebender Rahmen aus dem dunkleren Material hergestellt wird.

3. Vorrichtung zum Spritzgießen von ein-, zwei oder mehrfarbigen Kunststoffteilen in zwei oder mehreren, mittelbar oder unmittelbar aufeinanderfolgenden Schritten, mit einem Spritzwerkzeug mit Matrize (10), Kern (12,12') und Schiebern, dadurch **gekennzeichnet**, daß zwei gegeneinander auswechselbare Kerne (12,12') vorgesehen sind, daß der zunächst eingesetzte erste Kern (12) mit der Matrize (10) einen Formhohlraum (20) zum Spritzen des helleren, insbesondere transparenten Bereichs als Vorspritzling (26) bildet und daß der als nächstes einsetzbare zweite Kern (12') mit der Matrize (10) und dem Vorspritzling (26) einen Formhohlraum für den dunkleren Bereich 828) des Kunststoffteils bildet und dabei den Vorspritzling (26) nur in einem schmalen Randstreifen (34) um den Formhohlraum herum berührt.

4. Vorrichtung nach Anspruch 3, dadurch **gekennzeichnet**, daß der zweite Kern (12') einen vorspringenden Randstreifen (34) aufweist, der bei geschlossenem Formhohlraum den Vorspritzling (26) berührt.

5. Vorrichtung nach Anspruch 3, dadurch **gekennzeichnet**, daß der erste Kern (12) einen um die Grenzfläche des Vorspritzlings 26 herum verlaufende vertiefte Nut aufweist.
